# EUROPÄISCHE PATENTANMELDUNG

(11) **EP 0 793 191 A1**
(43) Veröffentlichungstag der Anmeldung: **03.09.1997**
(21) Anmeldenummer: 97103274.3
(22) Anmeldetag: 26.02.1997
(51) Int. Cl.: G06K 7/08, G06K 7/10

(54) **Vorrichtung zur Programmierung einer erdgebundenen Station**

(30) Priorität: 27.02.1996 CH 501/96
(71) Anmelder: Siemens Schweiz AG (Siemens Suisse SA) (Siemens Svizzera SA) Siemens Switzerland Ltd), 8047 Zürich (CH)
(72) Erfinder: Loder, Max, 8906 Bonstetten (CH)

(57) **Zusammenfassung**

Die Vorrichtung, die zur Programmierung einer mit einem nichtflüchtigen Speicher versehenen erdgebundenen Station (ESx; ESy) dient. weist eine Ein-/Ausgabeeinheit sowie einen mit wenigstens einem Speichermedium (MEM) verbundenen Prozessor (P) auf, der direkt oder über eine Steuereinheit mit einem ersten und einem zweiten Sender (XMa; XMb) sowie mit einem Empfänger (RX) verbunden ist, die über eine Frequenzweiche (FW) mit einer Antenne (LA) verbunden sind. Der erste und der zweite Sender (XMa; XMb) sind zur Abgabe eines ersten Signals f1 bzw. eines zweiten Signals f2 vorgesehen, die zur erdgebundenen Station (ESx; ESy) übertragen werden. Der Empfänger (RX) dient zum Empfang eines dritten Signals f3. Das erste Signal f1 wird dabei zur Übertragung von Daten und das zweite Signal f2 zur Signalisierung der Programmierfreigabe verwendet. Das dritte Signal f3 dient zur Übertragung von Daten von der erdgebundenen Station (ESx; ESy) zum Empfänger (RX). Durch die erfindungsgemässe Vorrichtung kann die erdgebundene Station (ESx; ESy) programmiert werden, ohne dass eine Kontaktierung der erdgebundenen Station (ESx; ESy) über einen Steckverbinder benötigt wird.

## Beschreibung

Die vorliegende Erfindung betrifft eine Vorrichtung nach dem Oberbegriff des Patentanspruchs 1.

In der Eisenbahntechnik werden insbesondere für die automatische Zugsicherung erdgebundene, zur Informationsabgabe an Fahrzeuge vorgesehene Sendestationen vorgesehen. Aus der WO 94/11754 ist ein Verfahren bekannt, das zur Datenübertragung zwischen einer erdgebundenen und einer mobilen Station vorgesehen ist. Von der mobilen Station werden Abfragesignale an die erdgebundene Station übertragen. Durch die Modulation dieser Abfrage- und Antwortsignale in beiden Stationen können konstante Daten (Identifikationssignale, Positionsdaten, etc.) oder auch variable Daten (vorherrschende Signalzustände, etc.) übertragen werden. Die festen Daten, die individuell für jede erdgebundene Station gesondert festgelegt sind, sind in nichtflüchtigen Speicherbausteinen der erdgebundenen Station abgelegt.

Z.B. aufgrund von Änderungen, die an den Geleiseanlagen vorgenommen wurden, müssen die in den erdgebundenen Stationen abgelegten festen Daten gelegentlich den neuen Verhältnissen entsprechend angepasst werden. Z.B. ist eine Änderung der zulässigen Höchstgeschwindigkeit vorzusehen. Zu diesem Zweck wird normalerweise ein Programmiergerät über eine Steckerverbindung an eine neu zu programmierende Station angeschlossen. Nachteilig dabei ist, dass die zumindest indirekt der Witterung ausgesetzten Steckkontakte bereits nach wenigen Jahren schadhaft werden können, wodurch eine einwandfreie Programmierbarkeit der Station nicht mehr gewährleistet ist.

Der vorliegenden Erfindung liegt daher die Aufgabe, zugrunde eine Vorrichtung zu schaffen, durch die die einwandfreie Programmierbarkeit von mit nichtflüchtigen Speichern versehenen erdgebundenen Stationen dauerhaft gewährleistet ist.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Die erfindungsgemässe Vorrichtung erlaubt die kontaktlose Programmierung der erdgebundenen Stationen. Durch die Einsparung von qualitativ hochwertigen und daher teuren Steckverbindern ergibt sich eine Reduktion des Aufwands. Ferner wird durch geeignete Massnahmen vorgesehen, dass kein ungewollte oder unkorrekte Änderung des Speicherinhalts der erdgebundenen Stationen erfolgt.

Die Erfindung wird nachfolgend anhand einer Zeichnung beispielsweise näher erläutert. Dabei zeigt:
- Fig. 1: zwei mit erdgebundenen Stationen versehene Schienenstränge, auf denen mit mobilen Stationen versehene Fahrzeuge verkehren,
- Fig. 2: eine erdgebundene Station während der Programmierung,
- Fig. 3: eine erfindungsgemässe Vorrichtung zur Programmierung von erdgebundenen Sendestationen,
- Fig. 4: den Signalverlauf zwischen einer erdgebundenen und einer mobilen Station während der Kommunikation und
- Fig. 5: den Signalverlauf zwischen einer erdgebundenen Station und der Programmiervorrichtung während der Programmierung.

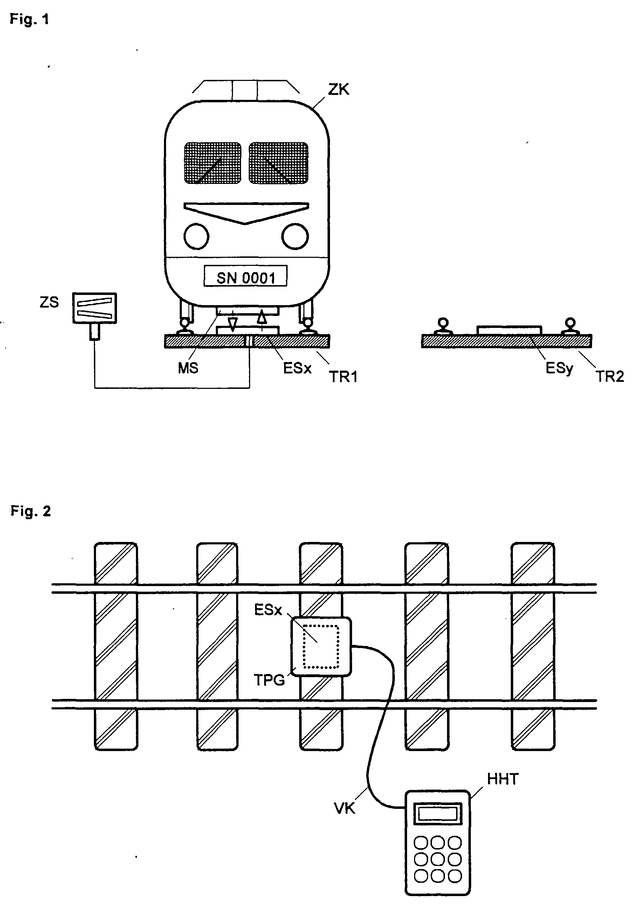

Fig. 1 zeigt zwei mit erdgebundenen Stationen ESx, ESy versehene Schienenstränge TR1, TR2, auf denen mit mobilen Stationen MS versehene Fahrzeuge ZK verkehren. Die Kommunikation zwischen den erdgebundenen und den mobilen Stationen ES bzw. MS erfolgt vorzugsweise durch die Übertragung von modulierten Trägersignalen. Die erdgebundenen Stationen sind zur Abgabe von Daten vorgesehen, die in einem nichtflüchtigen, elektrisch löschbaren Speicher (EEPROM) abgelegt sind.

Fig. 2 zeigt die erdgebundene Station ESx während der Programmierung. Die erfindungsgemässe Vorrichtung besteht aus einem transportablen Programmiergerät TPG, das bevorzugt über ein Kabel VK mit einem Terminal HHT verbunden ist, das wenigstens eine Anzeige und eine Tastatur aufweist. Das Terminal HHT könnte natürlich auch im transportablen Programmiergerät TPG integriert sein.

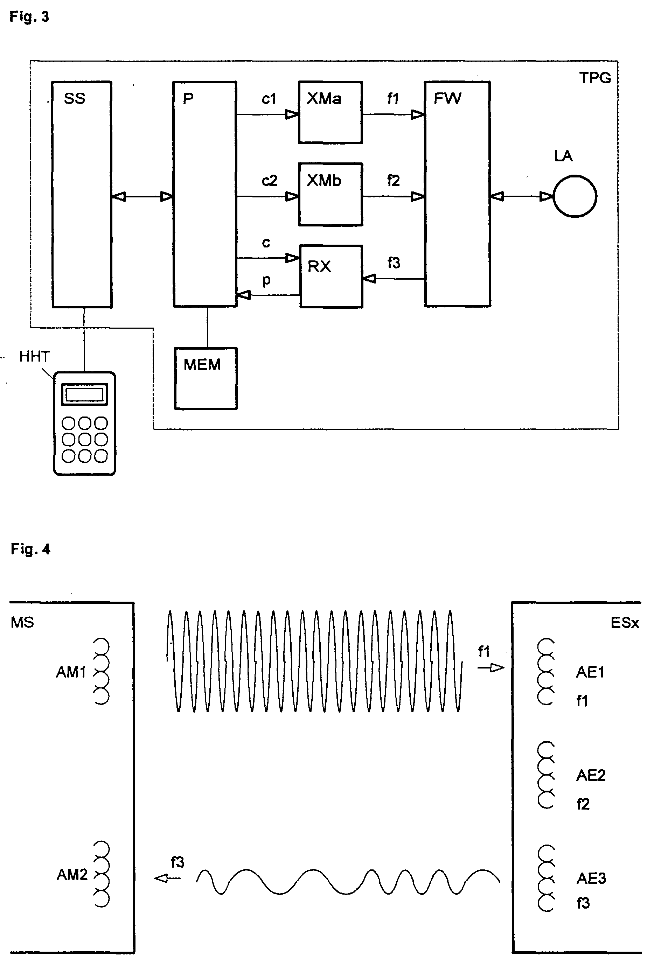

Wie aus Fig. 3 ersichtlich ist, weist das Programmiergerät TPG eine Antenne LA auf, die zur Ankopplung an die in der erdgebundenen Station ESx vorgesehene Antenne dient. Die Antenne LA ist auf der Unterseite des Programmiergerätes TPG angeordnet, das zur Programmierung wie eine Abdeckung über die erdgebundene Station ESx gelegt wird (siehe Fig. 2). Durchaus möglich, jedoch weniger vorteilhaft wäre eine Ausgestaltung, bei der die Antenne LA getrennt vorgesehen und lediglich über ein Kabel mit dem Programmiergerät TPG verbunden wäre. Das Programmiergerät TPG weist ferner bevorzugt eine Abschirmung auf, die verhindert, dass die von der Antenne LA abgegebene Strahlung nicht nur zu der zu programmierenden Station ESx, sondern auch noch zu weiteren Stationen ESy gelangen kann. Die Abschirmung kann in der Form eines Metallgeflechts oder einer Metallfolie in der Abdeckung des Programmiergerätes TPG vorgesehen sein.

Das Programmiergerät TPG weist einen Prozessor P auf, der mit wenigstens einem Speichermedium MEM, der über eine Schnittstelle SS mit dem Terminal HHT und der direkt oder über eine Steuereinheit mit einem ersten und einem zweiten Sender XMa, XMb sowie mit einem Empfänger RX verbunden ist. Der erste und der zweite Sender XMa, XMb sowie der Empfänger RX sind über eine Frequenzweiche mit der Antenne LA verbunden.

Durch den ersten Sender XMa, dem vom Prozessor P ein Steuersignal c1 zugeführt wird, wird ein Aktivierungssignal der Frequenz f1 über die Frequenzweiche FW und die Antenne LA an die erdgebundene Station ESx abgegeben. Dieses Aktivierungssignal wird in der erdgebundenen Station ESx gleichgerichtet und für die Stromversorgung der darin enthaltenen Module verwendet. Das Aktivierungssignal wird im ersten Sender XMa moduliert, so dass gleichzeitig Daten zur erdgebundenen Station ESx übertragen werden können. Zur Übertragung von Daten müsste ansonsten ein weiteres Signal vorgesehen werden. Die Modulation des Signals in Abhängigkeit der zu übertragenden Daten kann eine Amplitudenmodulation (z.B. eine Pulsdauer- oder eine Pulsweitenmodulation) sein, wie sie in R. Mäusl, Digitale Modulationsverfahren, Hüthig Verlag, Heidelberg 1991, auf Seiten 57 - 63 für die Übertragung von Analogsignalen angegeben ist. Für die Übertragung von digitalen Signalen werden lediglich zwei Pulsweiten bzw. Tastverhältnisse vorgesehen, zwischen denen das Aktivierungssignal umgeschaltet wird. Bevorzugt anwendbar sind weitere bekannte Modulationsverfahren, bei denen die Amplitude des modulierten Trägersignals nicht verändert wird.

Durch den zweiten Sender XMb, dem vom Prozessor P ein Steuersignal c2 zugeführt wird, wird ein Freigabesignal der Frequenz f2 über die Frequenzweiche FW und die Antenne LA an die erdgebundene Station ESx abgegeben. Nach Erhalt dieses Freigabesignals, das z.B. ein Sinussignal konstanter Frequenz und Amplitude ist, gibt die erdgebundene Station ESx den nichtflüchtigen Speicher (EEPROM) frei zur Programmierung mit den anhand dem Aktivierungssignal übertragenen Daten.

Nach Abschluss der Programmierung wird das Freigabesignal f2 ausgesetzt, wonach die mit dem Aktivierungssignal übertragenen Daten wiederum der Kommunikation mit der erdgebundenen Station ESx dienen. Z.B. kann an die erdgebundene Station ESx eine Instruktion zum (Rück-) Übertragen der im nichtflüchtigen Speicher (EEPROM) neu abgelegten Daten abgegeben werden. Die im nichtflüchtigen Speicher (EEPROM) abgelegten Daten werden anschliessend mittels einem Befehlssigal der Frequenz f3 an den im Programmiergerät TPG vorgesehenen Empfänger RX übertragen, der die demodulierten Daten p z.B. nach Erhalt eines Taktsignal c an den Prozessor P abgibt, welcher anschliessend überprüfen kann, ob die erdgebundene Station ESx korrekt programmiert wurde.

Den Frequenzen f1, f2 und f3 werden bevorzugt Werte im Megahertzbereich zugeordnet (z.B. f1 = 27 MHz, f2 = 9 MHz, f3 = 4 MHz).

Fig. 4 zeigt den Signalverlauf zwischen einer erdgebundenen und einer mobilen Station MS während der Abfrage. Die mobile Station MS weist z.B. eine Sendeantenne AM1 und Empfangsantenne AM2 auf. Die erdgebundene Station ESx weist z.B. zwei Empfangsantennen AE1 und AE2 sowie eine Sendeantenne AE3 auf. Zur Abfrage der erdgebundenen Station ESx wird von der Sendeantenne AM1 der mobilen Station MS ein Aktivierungssignal der Frequenz f1 an die erste Empfangsantenne AE1 der erdgebundenen Station ESx übertragen, welches darin gleichgerichtet und für die Stromversorgung der erdgebundenen Station ESx verwendet wird. Von der Sendespule AE3 der erdgebundenen Station ESx werden die aus dem programmierten Speicher ausgelesenen Daten zur Empfangsantenne AM2 der mobilen Station MS übertragen. Die zweite Empfangsantenne AE2 der erdgebundenen Station ESx bleibt unbenutzt.

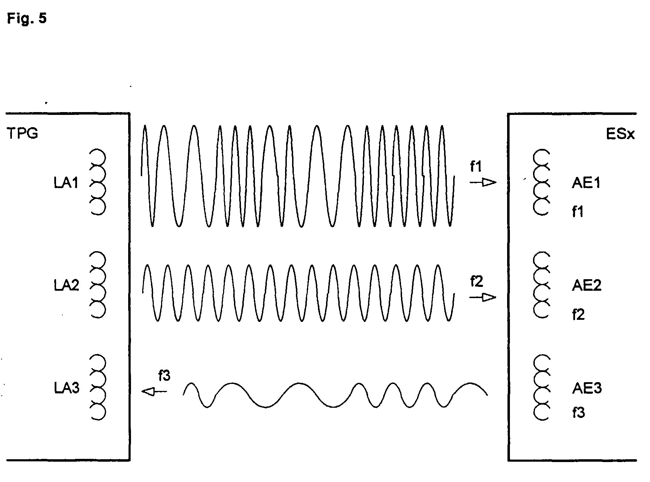

Fig. 5 zeigt den den Signalverlauf zwischen einer erdgebundenen Station ESx und der Programmiervorrichtung TPG, die zwei Sendeantennen LA1, LA2 sowie eine Empfangsantenne LA3 aufweist, während der Programmierung. Das Aktivierungsaignal f1, das im ersten Sender XMa moduliert wurde, wird von der Sendeantenne LA1 der Programmiervorrichtung TPG zur ersten Empfangsantenne AE1 der erdgebundenen Station ESx übertragen. Ferner wird ein Freigabesignal f2 (vorzugsweise ein Dauerstrichsignal) von der zweiten Sendeantenne LA2 der Programmiervorrichtung TPG zur zweiten Empfangsantenne AE2 der erdgebundenen Station ESx übertragen. Von der Sendeantenne AE3 der erdgebundenen Station ESx wird ein Signal f3 zur Empfangsantenne LA3 der Programmiervorrichtung TPG übertragen. welches die aus dem programmierten Speicherbereich ausgelsenen Daten p enthält, die in der Programmiervorrichtung TPG geprüft werden.

Selbstverständlich kann anstelle einzelner Antennen LA1, LA2, LA3 auch eine breitbandige Antenne LA verwendet werden.

## Patentansprüche

1. Vorrichtung zur Programmierung einer erdgebundenen Station (ESx; ESy), insbesondere einer Sende- und/oder Empfangsstation die einen nichtflüchtigen Speicher aufweist, mit einem mit wenigstens einem Speichermedium (MEM) verbundenen Prozessor (P) sowie wenigstens einer Ein-/Ausgabeeinheit, die zur Bedienung der Vorrichtung vorgesehen ist, **dadurch gekennzeichnet**, dass der Prozessor (P) direkt oder über eine Steuereinheit mit einem ersten und einem zweiten Sender (XMa; XMb) sowie mit einem Empfänger (RX) verbunden ist, die über eine Frequenzweiche (FW) mit einer Antenne (LA) verbunden sind, dass der erste bzw. der zweite Sender (XMa; XMb) bzw. der Empfänger (RX) zur Abgabe eines ersten Signals f1 bzw. eines zweiten Signals f2 bzw. zum Empfang eines dritten Signals f3 vorgesehen sind und dass das erste Signal f1 zur Übertragung von Daten zur erdgebundenen Station (ESx; ESy), dass das zweite Signal f2 zur Signalisierung der Programmierfreigabe zur erdgebundenen Station (ESx; ESy) dienen und dass das dritte Signal f3 zur Übertragung von Daten von der erdgebundenen Station (ESx; ESy) zum Empfänger (RX) dient.

2. Vorrichtung nach Anspruch 1, **dadurch gekennzeichnet**, dass die Sendeleistung des ersten Senders (XMa) derart bemessen ist, dass durch das erste Signal f1 die erdgebundene Station (ESx; ESy) mit der Betriebsspannung versorgt werden kann.

3. Vorrichtung nach Anspruch 1 oder 2, **dadurch gekennzeichnet**, dass der erste Sender (XMa) derart ausgestaltet ist, dass das erste Signal in Abhängigkeit der vom Prozessor (P) zugeführten Daten c1 modulierbar ist.

4. Vorrichtung nach Anspruch 3, **dadurch gekennzeichnet**, dass in Abhängigkeit der zu übertragenden Daten die Amplitude, die Phase oder die Frequenz des ersten Signals f1 änderbar ist.

5. Vorrichtung nach einem der Ansprüche 1 - 4, **dadurch gekennzeichnet**, dass das Freigabesignal f2 von konstanter Frequenz und konstanter Amplitude ist.

6. Vorrichtung nach einem der Ansprüche 1 - 5, **dadurch gekennzeichnet**, dass die Ein-/Ausgabeeinheiten in einem Terminal (HHT) angeordnet sind, das über ein Verbindungskabel (VK) mit einem Programmiergerät (TPG) verbunden ist, in dem der Prozessor (P), die Sender (XMa, XMb), der Empfänger (RX), die Frequenzweiche (FW) und die Antenne (LA) angeordnet sind.

7. Vorrichtung nach Anspruch 6, **dadurch gekennzeichnet**, dass das Programmiergerät (TPG), das vorzugsweise formschlüssig mit der erdgebundenen Station (ESx; ESy) verbindbar ist, mit einer Abschirmung versehen ist, durch die verhindert wird, dass beim Programmiervorgang fremde Stationen (ESy) beeinträchtigt werden.

8. Vorrichtung nach Anspruch 6, **dadurch gekennzeichnet**, dass die im dritten Signal f3 enthaltenen Daten p, welche in der erdgebundenen Station (ESx; ESy) aus dem neu programmierten Speicherbereich ausgelesen und dem Signal f3 aufgeprägt wurden, im Empfänger (RX) extrahierbar und dem Prozessor P zuführbar sind, der zu einem Vergleich dieser rückgemeldeten Daten p mit den zu programmierenden Daten c1 vorgesehen ist.
